# EUROPEAN PATENT APPLICATION

(11) **EP 2 868 482 A2**
(43) Date of publication of application: **06.05.2015**
(21) Application number: 14189967.4
(22) Date of filing: 22.10.2014
(51) Int. Cl.: B41M 1/06, B41C 1/10, B41N 1/12

(54) **Imaging blanket with dispersed carbon and micro-texture surface**

(30) Priority: 31.10.2013 US 201314068932
(71) Applicant: Palo Alto Research Center Incorporated, Palo Alto, California 94304 (US)
(72) Inventor: Hsieh, Bing R., Pleasanton, CA California 94566 (US); Stowe, Timothy D., Alameda, CA California 94501 (US)
(74) Representative: Jones, Helen M.M.

(57) **Abstract**

An imaging blanket for a variable data lithography printing system is disclosed that comprises a polymer body having incorporated therein carbon black and measured amount of surface-treated fumed silica. The carbon black serves to improve the thermal absorption efficiency for thermal patterning of a dampening fluid layer formed over the imaging blanket in use. The surface-treated fumed silica assists with desirable dispersion of the carbon black in the polymer body. The surface-treated fumed silica further assists with the formation of a surface micro-texture as part of the process of molding the imaging blanket. A method for manufacturing such an imaging blanket is also disclosed.

## Description

### CROSS-REFERENCE TO RELATED APPLICATIONS

The present disclosure is related to marking and printing systems, and more specifically to an image transfer element of such a system having a controlled surface topography.

Offset lithography is a common method of printing today. (For the purposes hereof, the terms "printing" and "marking" are interchangeable.) In a typical lithographic process an image transfer element or imaging plate, which may be a flat plate-like structure, the surface of a cylinder, or belt, etc., is configured to have "image regions" formed of hydrophobic and oleophilic material, and "non-image regions" formed of a hydrophilic material. The image regions are regions corresponding to the areas on the final print (i.e., the target substrate) that are occupied by a printing or marking material such as ink, whereas the non-image regions are the regions corresponding to the areas on the final print that are not occupied by said marking material. The hydrophilic regions accept and are readily wetted by a water-based fluid, commonly referred to as a fountain solution or dampening fluid (typically consisting of water and a small amount of alcohol as well as other additives and/or surfactants to, for example, reduce surface tension). The hydrophobic regions repel dampening fluid and accept ink, whereas the dampening fluid formed over the hydrophilic regions forms a fluid "release layer" for rejecting ink. Therefore the hydrophilic regions of the imaging plate correspond to unprinted areas, or "non-image areas", of the final print.

The ink may be transferred directly to a substrate, such as paper, or may be applied to an intermediate surface, such as an offset (or blanket) cylinder in an offset printing system. In the latter case, the offset cylinder is covered with a conformable coating or sleeve with a surface that can conform to the texture of the substrate, which may have surface peak-to-valley depth somewhat greater than the surface peak-to-valley depth of the imaging blanket. Sufficient pressure is used to transfer the image from the blanket or offset cylinder to the substrate.

The above-described lithographic and offset printing techniques utilize plates which are permanently patterned with the image to be printed (or its negative), and are therefore useful only when printing a large number of copies of the same image (long print runs), such as magazines, newspapers, and the like. These methods do not permit printing a different pattern from one page to the next (referred to herein as variable printing) without removing and replacing the print cylinder and/or the imaging plate (i.e., the technique cannot accommodate true high speed variable printing wherein the image changes from impression to impression, for example, as in the case of digital printing systems).

Efforts have been made to create lithographic and offset printing systems for variable data in the past. One example is disclosed in U.S. Patent 3,800,699, incorporated herein by reference, in which an intense energy source such as a laser is used to pattern-wise evaporate a dampening fluid.

In another example disclosed in U.S. Patent 7,191,705, incorporated herein by reference, a hydrophilic coating is applied to an imaging belt. A laser selectively heats and evaporates or decomposes regions of the hydrophilic coating. Next, a water-based dampening fluid is applied to these hydrophilic regions rendering them oleophobic. Ink is then applied and selectively transfers onto the plate only in the areas not covered by dampening fluid, creating an inked pattern that can be transferred to a substrate. Once transferred, the belt is cleaned, a new hydrophilic coating and dampening fluid are deposited, and the patterning, inking, and printing steps are repeated, for example for printing the next batch of images. Other similar methods and systems exist.

In general, the dampening fluid is applied as a relatively thin layer over an image plate. A certain amount of surface roughness is required in order to retain the dampening fluid thereover. In some commercially available imaging systems, specific non-printing areas are defined by a surface with an adequate surface roughness targeted to retain the thin layer of dampening fluid. Providing surface roughness is in part a function of the material forming the imaging plate. Metal imaging plates are susceptible to a variety of texturing methods, such as etching, anodizing, and so on.

A family of variable data lithography devices has been developed that use a structure to perform both the functions of a traditional imaging plate and of a traditional blanket to retain a patterned fountain solution for inking, and to delivering that ink pattern to a substrate. See U.S. patent appl. Serial no. 13/095,714, incorporated herein by reference. A blanket performing both of these functions is referred to herein as an imaging blanket. The imaging blanket retains a dampening fluid, requiring that its surface have a selected texture. Texturing of imaging blankets presents opportunities for optimization.

Furthermore, the imaging blanket must be thermally absorptive in order to enable rapid evaporation of the dampening fluid during patterning. One aspect of thermal absorptivity is the composition of the imaging blanket. Configuring the composition of the imaging blanket to balance thermal absorptivity together with other requirements of the blanket such as texture, durability, affinity to water and oil, and so on presents further opportunities for optimization.

### SUMMARY

Accordingly, the present disclosure is directed to systems and methods for providing an imaging blanket for a variable data lithography system addressing identified needs in the art. According to one aspect of the disclosure, an imaging blanket for a variable data lithography printing system is disclosed that comprises a polymer body having incorporated therein carbon black and measured amount of surface-treated fumed silica. The carbon black serves to improve the thermal absorption efficiency for thermal patterning of a dampening fluid layer formed over the imaging blanket in use. However, carbon black has a tendency to form clumps in the polymer body, leading to inefficiencies in thermal absorption and macro-scale artifacts affecting desired micro-texture of a surface of the imaging blanket. The surface-treated fumed silica assists with dispersion of the carbon black in the polymer body improving both the thermal absorption and reducing macro-scale artifacts. The surface-treated fumed silica further assists the polymer body with conformance to a texture surface of a mold used to form the imaging blanket, thereby improving the formation of a micro-textured surface on the imaging blanket.

Certain implementations of this aspect may provide an imaging blanket having surface-treated fumed silica comprising more than 2 percent by weight and less than 15 percent by weigh of the imaging blanket. Other implementations may provide an imaging blanket having surface-treated fumed silica comprising 9.06 percent by weight of said imaging blanket.

Certain implementations of this aspect may provide an imaging blanket having carbon black comprising more than 5 percent by weight and less than 30 percent by weigh of said imaging blanket, and in certain embodiments comprising substantially 15 percent by weight of said imaging blanket. Other implementations may provide an imaging blanket having carbon black comprising substantially 15 percent by weight of said imaging blanket. In certain implementations, the carbon black may be semiconductive.

According to other implementations, the polymer body may comprise silicone or fluorosilicone.

According to still other implementations of the disclosure an imaging blanket having a length in the range of 24-36 inches and a width in the range of 8-18 inches. This imaging blanket may form a portion of a complete variable data lithographic printing system.

According to certain implementations of the methods disclosed herein, an imaging blanket for a variable data lithography printing system may be manufactured by applying a composition comprising a polymer, carbon black, and surface-treated fumed silica into a mold structure, said mold structure presenting a surface having a recurring periodic micro-texture to said composition; curing the composition within the mold; and, releasing the composition from the mold to produce an imaging blanket such that a surface of the imaging blanket is molded to include said micro-texture with well-defined periodicity.

In certain implementations, an imaging blanket of the type disclosed above and herein may form an element of a variable data lithography system. In addition to the imaging blanket, such systems may include a dampening solution subsystem, a patterning subsystem, an inking subsystem, and an image transfer subsystem.

The above is a brief summary of a number of unique aspects, features, and advantages of the present disclosure. The above summary is provided to introduce the context and certain concepts relevant to the full description that follows. However, this summary is not exhaustive. The above summary is not intended to be nor should it be read as an exclusive identification of aspects, features, or advantages of the claimed subject matter. Therefore, the above summary should not be read as imparting limitations to the claims nor in any other way determining the scope of said claims.

### BRIEF DESCRIPTION OF THE DRAWINGS

In the drawings appended hereto like reference numerals denote like elements between the various drawings. In the drawings:
Fig. 1 is a table illustrating the compositions of various different imaging blanket additive formulations used to investigation the effects of various combinations of such additives on particle clumping, surface texture quality, and other attributes of an imaging blanket of a type used for variable data lithography or the like.
Fig. 2 is a plan-view of an example nano-textured master used for molding an imaging blanket of a type disclosed and discussed further herein.
Fig. 3 is a cross-section view of the example nano-textured master shown in Fig. 2.
Fig. 4 is a scanning electron micrograph of a base mold surface used for manufacturing an imaging blanket according to a process disclosed herein.
Fig. 5 is a scanning electron micrograph of an imaging blanked formed according to the parameters of sample 1 as detailed in the table of Fig. 1.
Fig. 6 is a scanning electron micrograph of an imaging blanked formed according to the parameters of sample 4 as detailed in the table of Fig. 1.
Fig. 7 is a scanning electron micrograph of a sample of an imaging blanket manufactured according to the parameters of sample 5 as detailed in the table of Fig. 1.
Fig. 8 is a scanning electron micrograph of a sample of an imaging blanket manufactured according to the parameters of sample 8 as detailed in the table of Fig. 1.
Fig. 9 is a scanning electron micrograph of a sample of an imaging blanket manufactured according to the parameters of sample 9 as detailed in the table of Fig. 1.
Fig. 10 is a scanning electron micrograph of a sample of an imaging blanket manufactured according to the parameters of sample 10 as detailed in the table of Fig. 1.
Fig. 11 is a scanning electron micrograph of a sample of an imaging blanket manufactured according to the parameters of sample 11 as detailed in the table of Fig. 1.
Fig. 12 is a scanning electron micrograph of a sample of an imaging blanket manufactured according to the parameters of sample 12 as detailed in the table of Fig. 1.
Fig. 13 is a scanning electron micrograph of a sample of an imaging blanket manufactured according to the parameters of sample 13 as detailed in the table of Fig. 1.
Fig. 14 is an illustration of selected subsystem comprising a variable data lithographic printing system including an imaging blanket of a type disclosed and discussed further herein.

### DETAILED DESCRIPTION

We initially point out that description of well-known starting materials, processing techniques, components, equipment and other well-known details may merely be summarized or are omitted so as not to unnecessarily obscure the details of the present disclosure. Thus, where details are otherwise well known, we leave it to the application of the present disclosure to suggest or dictate choices relating to those details.

Many of the examples mentioned herein are directed to an imaging blanket (including, for example, a printing sleeve, belt, drum, and the like) that has a uniformly grained and textured blanket surface that is ink-patterned for printing. In a still further example of variable data lithographic printing, such as disclosed in U.S. patent appl. Serial no. 13/095,714, incorporated herein by reference, a direct central impression printing drum having a low durometer polymer imaging blanket is employed, over which for example, a dampening fluid may be formed and inked. Such a polymer imaging blanket requires, among other parameters, a unique specification of surface roughness, radiation absorptivity, and oleophobicity.

The controlled surface roughness has the function of retaining a relatively very thin (for example, on the order of 200 nm) dampening fluid layer for subsequent selective removal, for example by an incident near-infrared (IR) laser beam. In certain embodiments, incorporation of surface-treated fumed silica has been found to improve both carbon dispersion in an imaging blanket (producing improved thermal absorption efficiency) and the formation of a desired surface micro-texture. Furthermore, this incorporation of fumed silica produces a texture that address the problems of texture irregularity found in prior texturing approaches, particularly in textures below 1 micron (< 11-Jm) pitch and height.

According to this disclosure, a method of surface texturing a variable data lithography imaging blanket having a polymer body is disclosed. According to certain embodiments, the method comprises polymer surface texturing. The polymer (such as silicone) imaging blankets are often formed by casting. Typical as-cast polymer surfaces have a high surface gloss, especially on the molded face surface. A selected fumed silica is introduced into the blanket material during formation.

According to one fabrication process for the variable data lithography imaging blanket disclosed herein, a platinum cured two-part liquid silicone chemistry is employed. Part A of the formulation may be prepared as follows: A mixture of a vinyl terminated or vinyl containing silicone or a vinyl terminated fluorosilicone (50-70 wt%), carbon black (10-20 wt%), surface treated silica (2-10 wt%), solvent (2 to 3 times of the solid weight) and a grinding media (1 to 2 times of the total weight of the total weight of the aforementioned ingredients) is mixed with a paint shaker, a roll mill, or a pigment attritor for 8 to 24 hours. Part B of the formulation is prepared by mixing a methylhydrosilicone or a fluorohydrosilicone (10-20 wt%) and solvent (1 to 6 times of the weight of the hydrosilicone). Platinum catalyst (10-200ppm) is added into part A mixture, following by adding part B. The resulting mixture is mixed, for example for less than 30 minutes, fumed silica is then introduced, and the material mixed further.

Several general goals of the present disclosure are to improved carbon dispersion in and formation of micro-texture on the blanket, each as discussed further below. The introduction of surface treated hydrophobic fumed silica is one unexpected approach to achieving these goals.

Another approach for improving the carbon dispersion is to use surface treated carbon black such as the Cabot's Emperor series of carbon black (Cabot Corporation, Boston, MA). Conducting (or semiconducting) carbon black, such as Cabot's Vulcan XC72,0rion Engineering Carbon's Printex L6 and Printex XE-2B (Orion Engineered Carbons, Kingwood, TX), are examples of thermal absorption fillers. Examples of treated silica include, but are not limited to, Cabosil TS-610 and TS-530 (Cabot Corporation, Boston, MA) and Evonik Aerosil R812 (Evonic Industries, Parsippany, NJ). Vinyl-containing or hydrosilane-containing silicones and fluorosilicones with a wide range of molecular weights are available for Gelest Inc. (Gelest, Inc., Morrisville, PA 19067), Momentive Performance Materials Inc. (Momentive, Columbus, OH 43215), Dow Corning (Dow Corning Corporation, Midland, MI), NuSiiTechnology (NuSil Technology LLC, Carpinteria, CA 93013), and Wacker (WackerChemie AG, Munich, Germany).

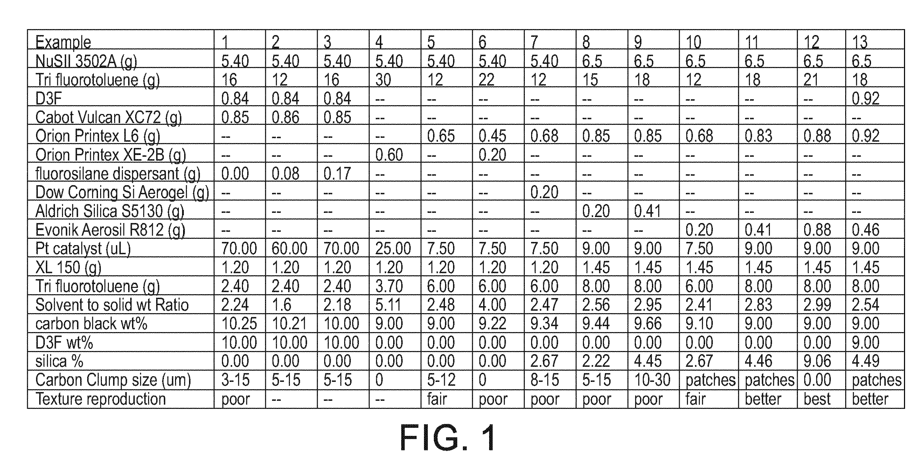

Fig. 1 illustrates a plurality of examples of various formulations of imaging blanket additives, and an evaluation of the resulting structures. A comparison of these examples may be used, for example, to evaluate the selected formulations. Several commercially available carbon black materials are employed in these examples in an imaging blanket comprising a fluorosilicone body material (although silicone and other similar materials may also be utilized).

Known methods of texturing a silicone blanket include wet casting the liquid silicone on conventional offset printing plates, diamond micro-polishing films or aluminum oxide lapping films. However, the texture of known plates and films are highly stochastic. Therefore, we have utilized a specialized micro-textured master mold (e.g., available from Nanotexx GmbH). A micro-textured master embossing roller is first fabricated by means of conventional semiconductor lithographic techniques. The micro-texture of the roller is then imprinted onto a wet soft lacquer coating deposited on a thin Mylar film. The imprinted lacquer is then cured by UV light to give the final mold films with well-defined nano-texture. Other processes for producing a master mold are known, and that disclosed herein is not limiting.

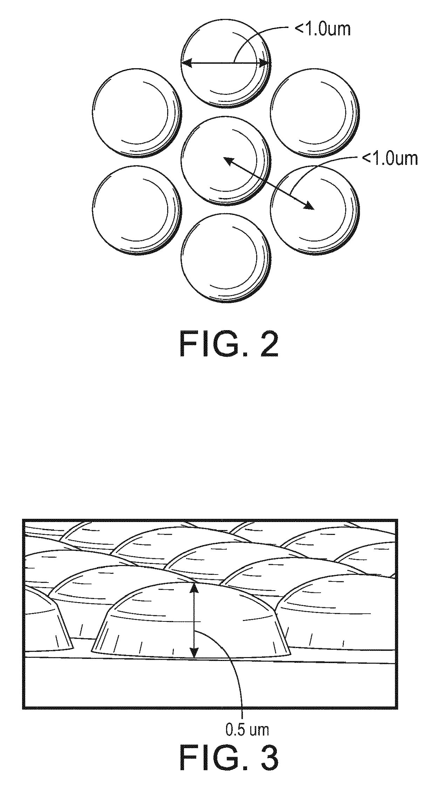

One or more of many possible nano-texture designs and arrangements may be formed on a mold surface for ultimate transfer to the blanket during molding. These designs and arrangements include, but are not limited to, pyramids, hexagons, and circles. One example of a nano-texture is a hexagonal well packing having submicron pitches (0.1 -1.0 micron), pit diameters (0.1-1.0 micron) and depths (0.1 - 1.0 micron) as shown in Figs. 2 and 3.

As shown in Fig. 1, a series of blanket samples were prepared and characterized in order to determine the most favorable formulations for achieving high degree of carbon dispersion and nano-texture reproduction. We explored the use of different semiconducting carbon black, fluorosilicone oil, dispersants, silica aerogel, and surface treated silica in order achieve high degree of carbon dispersion and high quality texture reproduction. The detail procedure for the fabrication of the blanket samples is discussed further below.

Three types of conductive carbon black, namely Cabot Vulcan XC72, Orion Printex L6 and XE-28, with respective **BET** surface area of 220, 250 and 1000 m2/g. were studied. The quality of the carbon dispersion and the texture reproduction were characterized by examining the cross section of a blanket sample to determine the sizes of the carbon clumps and the molded surface respectively using scanning electron microscopy. As shown in the table of Fig. 1 for samples 1-3 containing Cabot Vulcan XC72 carbon black, 3-15 micron discrete carbon clumps were observed, indicating very poor carbon dispersion. Similarly, large carbon clumps were observed for samples 4-7 that contains Orion Printex L6 carbon black. These indicated that additives such as fluorosilane dispersant, such as 1 H, 1 H, 2H, 2H-fluorooctyl trihydroxysilane (see US patent 7,763,678), silica aerogel, and untreated silica, such as Aldrich silica S5130 were ineffective in breaking up the carbon clumps. Unexpectedly, in the presence of surface treated silica, such as EvonikAerosil R812, carbon clumps were broken up into more uniform patches, as illustrated by samples 8-10 having 2.67 - 4.49 wt% R812. Patches disappeared upon further increasing R812 to 9.0 wt%, as illustrated by sample 11 where no discrete clumps or patches were found.

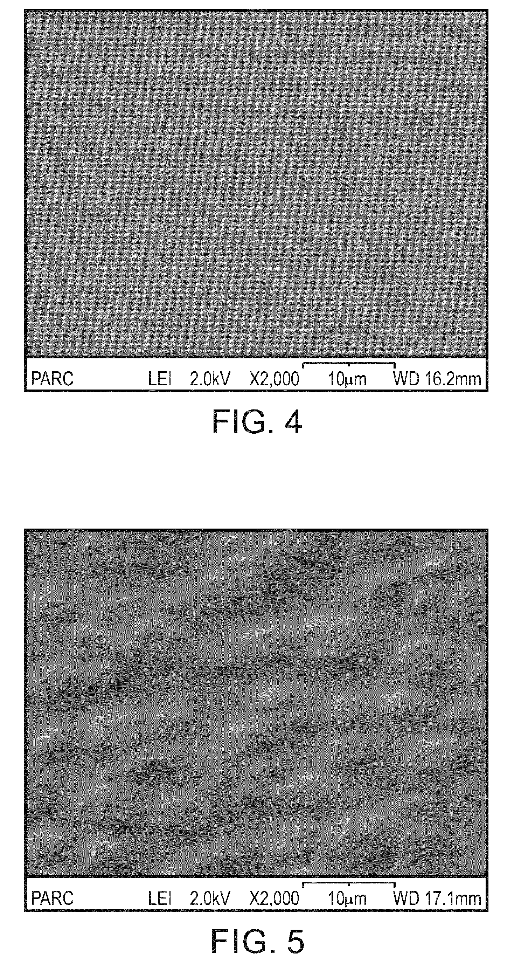

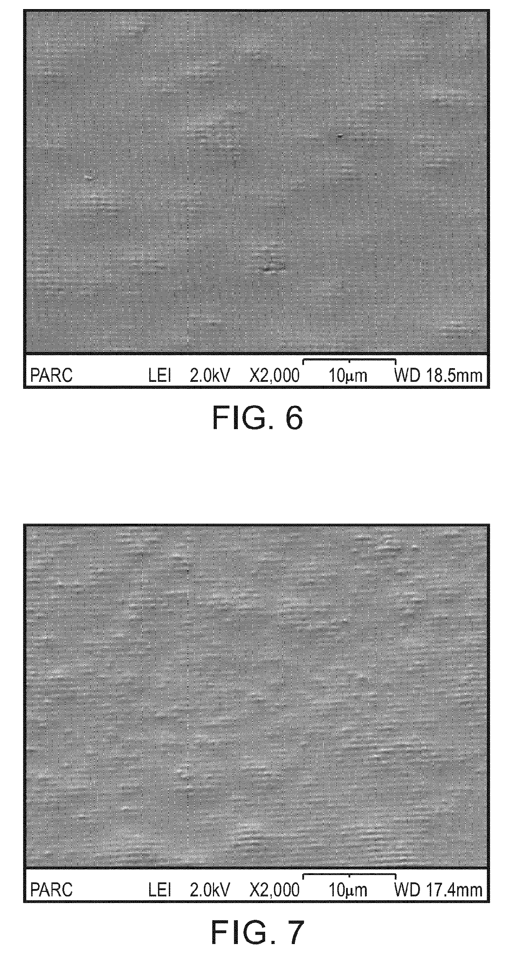

A Nanotexx mold having pitch length and height of about 1 micron (see Fig. 4) was used to study texture reproduction of the various formulations. As exemplified in Figs. 5 and 6 for samples 1 and 4 respectively, there are less protruding carbon clumps for sample 4 than for sample 1. As a result, sample 4 shows better texture reproduction, indicating that Orion Printex L6 is more compatible with the fluorosilicone binder than Cabot Vulcan XC72.

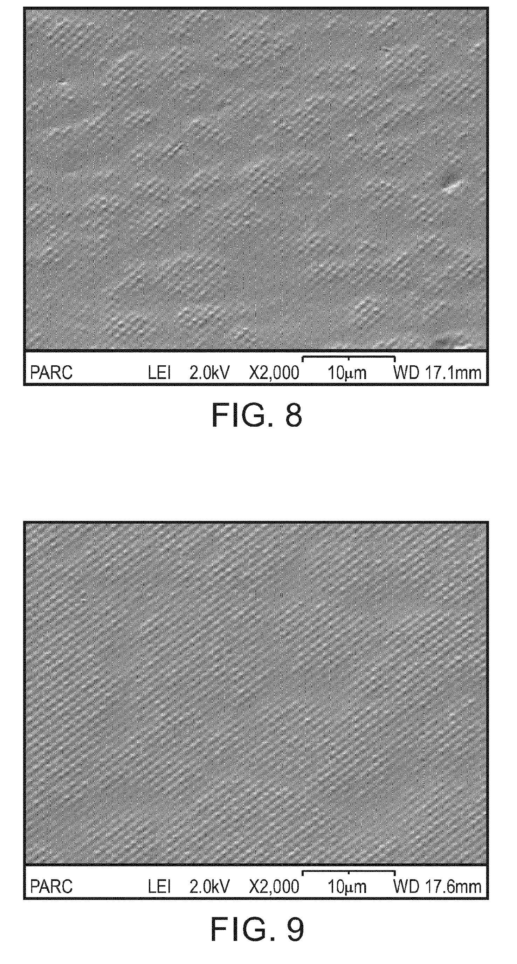

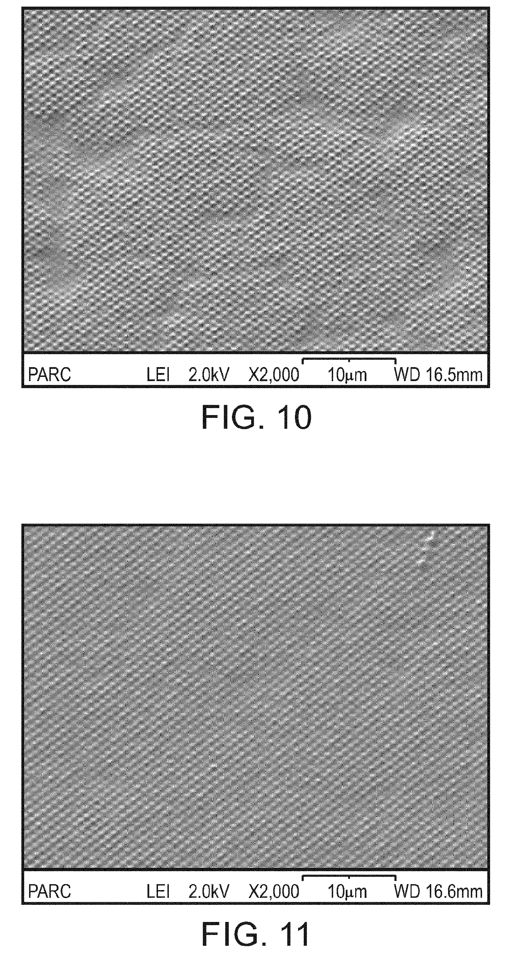

We explored the use of silica nanoparticles as the additives in fluorosilicone blanket. The use of silica aerogel (sample 5) and untreated hydrophilic silica (samples 6 and 7) did not improve texture reproduction. See for example Fig. 7 for sample 5. By contract, the use of surface treated hydrophobic silica such as Evonik's R812 not only improves the carbon dispersion but also the texture reproduction, as shown in Figs. 8-11 for samples 8-12. Results indicate that the present of carbon clumps causes uneven surfaces that lead to uneven contact with the mold and thus poor texture reproduction. Untreated silica is hydrophilic (due to surface Si-OH groups), not compatible with the rest hydrophobic ingredients in the formulation including vinyl terminated fluorosilicone, trifluorotoluene, and carbon black and prone to self-agglomerate. On the other hand surface treated silica having surface Si-OCH3 groups is hydrophobic that could be dispersed evenly among the hydrophobic ingredients. However, breaking up carbon clumps in its presence is unexpected. One theory is that the presence of high affinity between carbon black particles and silica nanoparticles lead to the breakage of carbon clumps.

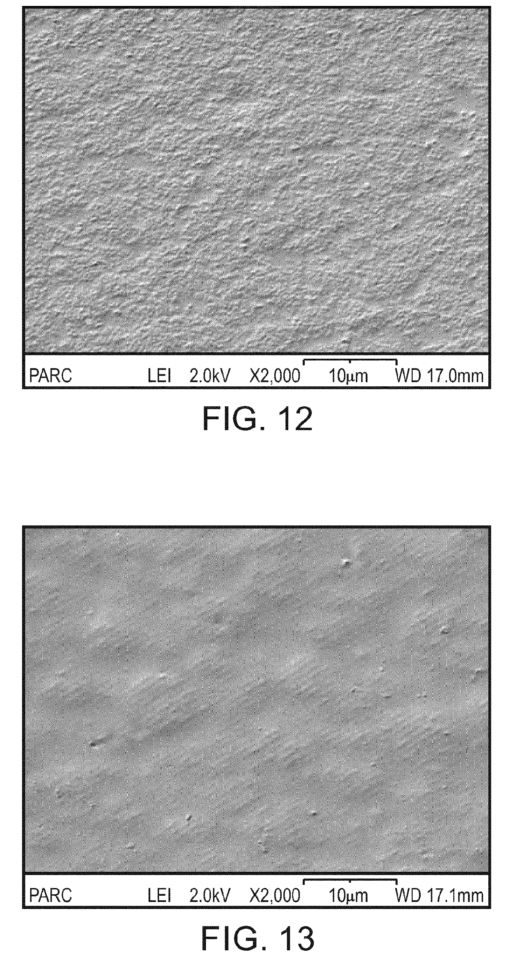

The use of high surface area carbon black such as the Orion Printex XE-28 (sample 12) gave a blanket without carbon clumps in cross section view. However, as shown in Fig. 12, uneven surface caused by slightly protruding carbon patches are noticeable that would likely lead to poor texture reproduction. Sample 13, which contain both Orion Printex L6 and XE-28, show carbon clumps and poor texture reproduction. The absence of carbon clumps for the Orion Printex XE-28 may be attributable to its much higher surface area of 1000 m2/g, which is about 4X higher that of Cabot Vulcan XC72 and Orion Printex L6.

The general procedure for sample preparation is described below as for the preparation of sample 1, listed under column 1 of Fig. 1. A carbon dispersion was first prepared by adding Cabot Vulcan XC72 carbon black (0.85 g), NuSil FS-3502-1A (5.4 g), 1,3,5-tris[(3,3,3-trifluoropropyl)methyl]cyclotrisiloxane (D3F, 0.84 g), trifluorotoluene (16g), and stainless steel balls (20g) into a 60 ml polypropylene (PP) bottle. The resulting mixture was shaken at high speed overnight using a wrist-action shaker. Platinum catalyst (70 microliter, from Gelest SIP6831.2 having platinum concentration of 2.1 - 2.4%) was added into the 60ml PP bottle via a micro-syringe and the resulting mixture was shaken for 5 minutes on a wrist-action shaker to give the final part A mixture. A premixed part B solution containing Nusil XL150, a methyhydrofluorosilicone, (1.2 g) and trifluorotoluene (2.4 g) was added all at once into the PP bottle and the resulting mixture was shaken for 10 minutes. The final mixture was poured onto a 3.5"x3.5"nanotextured mold (as discussed with respect to Figs. 2 and 3) held by two sided adhesive to the bottom of a 4" x 4" polypropylene dish. The solvent was allowed to evaporate, and the mixture was cured at room temperature overnight to give fluorosilicone sample 1.

The dried sample was released from the mold, placed on an aluminum plate with the texture side up, and then cured in an oven at 160-170°C for at least 6 hours to complete curing and to give the final sample 1. The texture of the resulting blanket material was then characterized by scanning electron microscopy. As shown in Fig. 4, carbon clumps of 3-15 micron can be seen, resulting in an uneven surface and indicating very poor carbon dispersion. Clumps of the observed size negatively affect size and uniformity of imaging blanket surface texture, thermal efficiency, wear resistance, etc. In addition, the texture reproduction is poor and primarily occurs at the carbon clump areas.

As discussed, samples 2 and 3 are additional examples using Cabot Vulcan XC72, while varying the percentage of other constituents, such as solvent. Samples 4 through 12 of Fig. 1 illustrate additional examples, using Orion Printex L6 (Orion Engineered Carbons, Kingwood, TX), Orion Printex XE-28, or both.

We have shown the use of surface treated silica in combination with one particular conducting carbon black, the Orion Printex L6, resulted in improvement of carbon dispersion by breaking up carbon clumps. While data is not provided for use of surface treated silica for other carbon black compositions, such as the Cabot and XE-28 carbon, this approach for carbon black generalizes and would work for them as well.

In addition to carbon black, fumed silica was introduced into various examples from Fig. 1 during formation. Three types of silica, namely Dow Corning silica aerogel (Dow Corning Corporation, Midland, MI), Aldrich silica S5130 (Sigma-Aldrich Company, St. Louis, MO), and Aerosil R812 (Evonic Industries, Parsippany, NJ) were investigated as additives. These are illustrated for samples 6-11 of Fig. 1.

As shown in Fig. 1, carbon clumps and poor texture reproduction persist in the presence of Dow Corning Aerogel and Aldrich fumed silica S5130 (examples 7-9). However, Aerosil R812 showed progressive improvement in carbon dispersion and surface texture reproduction as the percentage-by-weight of this material was increased from 2.67% to 4.46% and to 9.06% (examples 10-12). The imaging blanket sample 12 that contains 9.06% of Aerosil R812 showed no carbon clumps and excellent micro-texture production. Aerosil R812 is surface-treated fumed silica and Aldrich fumed silicaS5130 is not surface-treated.

In general, the benefits of providing surface-treated fumed silica in the imaging blanket system are realized when the silica is present in an amount greater than approximately 5 percent by weight, up to approximately 15 percent by weight of blanket solids (although an upper limit will be set by resulting brittleness of the blanket, which is a function of many variables including, but not limited to, other materials present in the blanket system and the processes used to form the blanket. According to one specific embodiment discussed above, surface-treated fumed silica substantially in a percentage by weight of 9.06 provided observed optimized carbon dispersion and surface micro-texture formation. However, according to other embodiments, such as other compositions of the imaging blanket system, other percentages may prove optimal.

We have extended the results of the above examples to produce commercially viable fluorosilicone imaging blankets for variable data lithography applications. Such blankets are on the order of 24-36 inches in length and 8-18 inches in width. While historically it has been a challenge to obtain uniform small-feature texturing of such large surface areas, due to the incorporation of surface-treated fumed silica the produced imaging blankets have demonstrated highly uniform sub-micron texturing, accurately reproduced from an appropriate molding structure. Hills and valleys are uniformly random across the entire surface area.

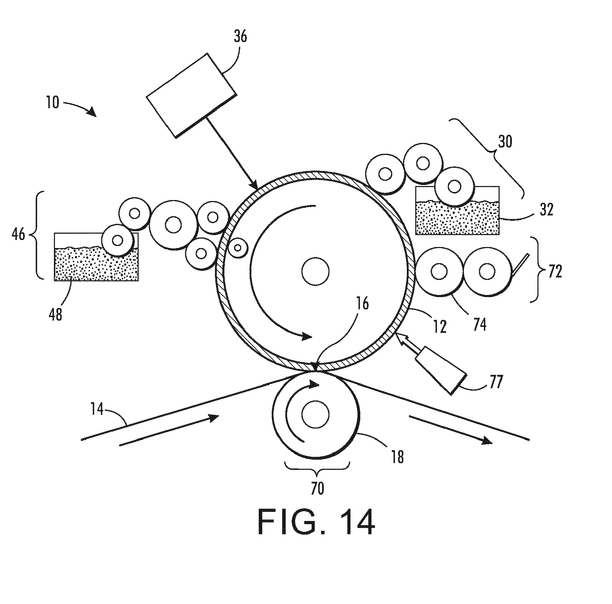

Imaging blankets of the type described above may be deployed in a variable data lithography printing system 10 such as illustrated in Fig. 14, which illustrates certain subsystems of such a system, but is only one example of many in which such blankets may be deployed. System 10 comprises an imaging member, in this embodiment a drum, but may equivalently be a plate, belt, etc., carrying an imaging blanket 12 of the type described above. Imaging blanket 12 applies an ink image to substrate 14 at nip 16 where substrate 14 is pinched between imaging blanket 12 and an impression roller 18. A wide variety of types of substrates, such as paper, plastic or composite sheet film, ceramic, glass, etc. may be employed. For clarity and brevity of this explanation we assume the substrate is paper, with the understanding that the present disclosure is not limited to that form of substrate. For example, other substrates may include cardboard, corrugated packaging materials, wood, ceramic tiles, fabrics (e.g., clothing, drapery, garments and the like), transparency or plastic film, metal foils, etc. A wide latitude of marking materials may be used including those with pigment densities greater than 10% by weight including but not limited to metallic inks or white inks useful for packaging. For clarity and brevity of this portion of the disclosure we generally use the term ink, which will be understood to include the range of marking materials such as inks, pigments, and other materials which may be applied by systems and methods disclosed herein.

Disposed at a first location around imaging blanket 12 is dampening solution subsystem 30. Dampening solution subsystem 30 generally comprises a series of rollers (referred to as a dampening unit) for uniformly wetting the surface of imaging blanket 12. It is well known that many different types and configurations of dampening units exist. The purpose of the dampening unit is to deliver a layer of dampening solution 32 having a uniform and controllable thickness. In one embodiment this layer is in the range of 0.2 *).Im* to 1.0 *).Im,* and very uniform without pin holes. The dampening solution 32 may be composed mainly of water, optionally with small amounts of isopropyl alcohol or ethanol added to reduce its natural surface tension as well as lower the evaporation energy necessary for subsequent laser patterning. In addition, a suitable surfactant is ideally added in a small percentage by weight, which promotes a high amount of wetting to the reimageable surface layer 20.

After applying a precise and uniform amount of dampening solution, in one embodiment an optical patterning subsystem 36 is used to selectively form a latent image in the dampening solution by image-wise evaporating the dampening solution layer using laser energy, for example. It will be understood that a variety of different systems and methods for delivering energy to pattern the dampening solution over the reimageable surface may be employed with the various system components disclosed and claimed herein. However, the particular patterning system and method do not limit the present disclosure.

Following patterning of the layer of dampening solution 32, an inker subsystem 46 is used to apply a uniform layer of ink48, over the layer of dampening solution 32 and imaging blanket 12. Inker subsystem 46 may consist of a "keyless" system using an anilox roller to meter an offset ink onto one or more forming rollers. Alternatively, inker subsystem 46 may consist of more traditional elements with a series of metering rollers that use electromechanical keys to determine the precise feed rate of the ink. The general aspects of inker subsystem 46 will depend on the application of the present disclosure, and will be well understood by one skilled in the art.

In order for ink from inker subsystem 46 to initially wet over the imaging blanket 12, the ink must have low enough cohesive energy to split onto the exposed portions of imaging blanket 12 (where dampening solution has been removed by patterning subsystem 36) and also be hydrophobic enough to be rejected at dampening solution regions (where dampening solution has not been removed by patterning subsystem 36). Since the dampening solution is low viscosity and oleophobic, areas covered by dampening solution naturally reject all ink because splitting naturally occurs in the dampening solution layer that has very low dynamic cohesive energy. In areas without dampening solution, if the cohesive force between the ink is sufficiently lower than the adhesive force between the ink and imaging blanket 12, the ink will split between these regions at the exit of the forming roller nip. The ink employed should therefore have a relatively low viscosity in order to promote better filling of solution-free regions and better adhesion to imaging blanket 12.

In addition to this rheological consideration, it is also important that the ink composition maintain a hydrophobic character so that it is rejected by regions of dampening solution 32. This can be maintained by choosing offset ink resins and solvents that are hydrophobic and have non-polar chemical groups (molecules).

The ink is next transferred to substrate 14 at transfer subsystem 70. In the embodiment illustrated in Fig. 14, this is accomplished by passing substrate 14 through nip 16 between imaging blanket 12 and impression roller 18. Adequate pressure is applied between imaging blanket 12 and impression roller 18 such that the ink (in regions where dampening solution was removed) is brought into physical contact with substrate 14. Adhesion of the ink to substrate 14 and strong internal cohesion cause the ink to separate from imaging blanket 12 and adhere to substrate 14.

Following transfer of the majority of the ink to substrate 14, any residual ink and residual dampening solution must be removed from imaging blanket 12, preferably without scraping or wearing that surface. Most of the dampening solution can be easily removed quickly by using an air knife 77 with sufficient airflow. However some amount of ink residue may still remain. According to one embodiment disclosed herein, removal of this remaining ink is accomplished at cleaning subsystem 72 using a first cleaning member, such as sticky, tacky member 74, in physical contact with imaging blanket 12. While shown and described as a roller, tacky member 74 may be a plate, belt, etc. Tacky member 74 has a high surface adhesion and pulls the residual ink and any remaining (small) amounts of surfactant compounds from the dampening solution off imaging blanket 12.

The examples discussed herein are provided simply to illustrate the resulting benefit of the addition of surface-treated fumed silica to the imaging blanket system. The present disclosure should not be interpreted to be limited to any one set of conditions of these examples. Indeed, no limitation in the description of the present disclosure or its claims can or should be read as absolute. The limitations of the claims are intended to define the boundaries of the present disclosure, up to and including those limitations. To further highlight this, the term "substantially" may occasionally be used herein in association with a claim limitation (although consideration for variations and imperfections is not restricted to only those limitations used with that term). While as difficult to precisely define as the limitations of the present disclosure themselves, we intend that this term be interpreted as "to a large extent", "as nearly as practicable", "within technical limitations", and the like.

While examples and variations have been presented in the foregoing description, it should be understood that a vast number of variations exist, and these examples are merely representative, and are not intended to limit the scope, applicability or configuration of the disclosure in any way. Various of the above-disclosed and other features and functions, or alternative thereof, may be desirably combined into many other different systems or applications. Various presently unforeseen or unanticipated alternatives, modifications variations, or improvements therein or thereon may be subsequently made by those skilled in the art which are also intended to be encompassed by the claims, below.

Therefore, the foregoing description provides those of ordinary skill in the art with a convenient guide for implementation of the disclosure, and contemplates that various changes in the functions and arrangements of the described examples may be made without departing from the spirit and scope of the disclosure defined by the claims thereto.

## Claims

1. An imaging blanket for a variable data lithography printing system, comprising:
A silicone or fluorosilicone body having incorporated therein;
carbon black; and
surface-treated fumed silica.

2. The imaging blanket of claim 1, wherein said surface-treated fumed silica comprises more than 2 percent by weight and less than 15 percent by weigh of said imaging blanket.

3. The imaging blanket of claim 2, wherein said surface-treated fumed silica comprises substantially 9.06 percent by weight of said imaging blanket.

4. The imaging blanket of claim 2, wherein said carbon black comprises substantially more than 5 percent by weight and less than 30 percent by weigh of said imaging blanket.

5. The imaging blanket of claim 4, wherein said carbon black comprises substantially 15 percent by weight of said imaging blanket.

6. A variable data lithography system, comprising:
an imaging blanket comprising:
a polymer body having incorporated therein;
carbon black;
surface-treated fumed silica;
a dampening solution subsystem for applying a layer of dampening solution to said imaging blanket;
a patterning subsystem for selectively removing portions of the dampening solution layer so as to produce a latent image in the dampening solution;
an inking subsystem for applying ink over the imaging blanket such that said ink selectively occupies regions of the imaging blanket where dampening solution was removed by the patterning subsystem to thereby produce an inked latent image; and
an image transfer subsystem for transferring the inked latent image to a substrate.

7. The variable data lithography system of claim 6, wherein said surface-treated fumed silica comprises more than 2 percent by weight and less than 15 percent by weigh of said imaging blanket.

8. The variable data lithography system of claim 7, wherein said surface-treated fumed silica comprises substantially 9.06 percent by weight of said imaging blanket.

9. The variable data lithography system of claim 8, wherein said carbon black comprises substantially more than 5 percent by weight and less than 30 percent by weigh of said imaging blanket.

10. The variable data lithography system claim 9, wherein said carbon black comprises substantially 15 percent by weight of said imaging blanket.
